# EUROPEAN PATENT APPLICATION

(11) **EP 4 819 627 A1**
(43) Date of publication of application: **07.10.2026**
(21) Application number: 25305494.4
(22) Date of filing: 04.04.2025
(51) Int. Cl.: H04N 21/81, H04L 65/60

(54) **TRANSMISSION OF MULTI-MODAL FLOWS OF AN EXTENDED REALITY SCENE BASED ON AN IMPORTANCE INDICATION**

(71) Applicant: InterDigital CE Patent Holdings, SAS, 75017 Paris (FR)
(72) Inventor: HIRTZLIN, Patrice, 35830 BETTON (FR); FAIVRE D'ARCIER, Etienne, 35750 SAINT GONLAY (FR); FONTAINE, Loic, 35530 NOYAL SUR VILAINE (FR); LELIEVRE, Sylvain, 35760 MONTGERMONT (FR); PERIARD, Francois, MONTREAL, H3T IL7 (CA); HUDON, Mario, BROSSARD, J4Z 0T7 (CA); FONTAINE, Patrick, 35200 RENNES (FR); QUINQUIS, Cyril, 35520 MELESSE (FR); GUDUMASU, Srinivas, MONTREAL, H3W 1K9 (CA)
(74) Representative: Vossius & Partner Patentanwälte Rechtsanwälte mbB

(57) **Abstract**

In some implementations, a method is presented, comprising: assigning a first importance indication to a first data set for an Extended Reality scene, the first data set corresponding to first one or more media contents in the Extended Reality scene; and assigning a second importance indication to a second data set for the Extended Reality scene, the second data set corresponding to second one or more media contents in the Extended Reality scene, wherein the first importance indication is different from the second importance indication, and wherein the first importance indication and the second importance indication are based on at least one of a viewing distance, a viewing frustum, a screen coverage, rendering quality, and quality of experience.

## Description

### BACKGROUND

Extended Reality (XR) is an umbrella term that includes Virtual Reality (VR), Augmented Reality (AR), and Mixed Reality (MR). An XR device is a device that operates by blending the physical world and digital worlds using a combination of hardware and software. XR devices may connect to a network via WiFi, cellular networks including LTE, 5G, and 6G, Bluetooth, or a wired connection, for example USB or Ethernet.

### BRIEF SUMMARY

Briefly stated, in one embodiment, a method is presented, comprising: assigning a first importance indication to a first data set for an Extended Reality scene, the first data set corresponding to first one or more media contents in the Extended Reality scene; assigning a second importance indication to a second data set for the Extended Reality scene, the second data set corresponding to second one or more media contents in the Extended Reality scene, wherein the first importance indication is different from the second importance indication, and wherein the first importance indication and the second importance indication are based on at least one of a viewing distance, a viewing frustum, a screen coverage, rendering quality, and quality of experience; and transmitting the first importance indication and second importance indication.

According to another embodiment, an apparatus is provided, comprising at least one memory and one or more processors, wherein the one or more processors are configured to: assign a first importance indication to a first data set for an Extended Reality scene, the first data set corresponding to first one or more media contents in the Extended Reality scene; assign a second importance indication to a second data set for the Extended Reality scene, the second data set corresponding to second one or more media contents in the Extended Reality scene, wherein the first importance indication is different from the second importance indication, and wherein the first importance indication and the second importance indication are based on at least one of a viewing distance, a viewing frustum, a screen coverage, rendering quality, and quality of experience; and transmit the first importance indication and second importance indication.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 illustrates an exemplary MPEG scene description architecture;
FIG. 3 illustrates an example of a rendering loop for visual data;
FIGs. 4A and 4B illustrate a STAR-based 5G interactive immersive service architecture;
FIG. 5 illustrates a node graph representation of an XR scene;
FIG. 6 illustrates PDU sets and data flows;
FIG. 7 illustrates a one-byte RTP header extension format for PDU set marking;
FIGs. 8-10 illustrates examples where the spatial relationships of the media within an XR scene may impact the importance indication of the PDU Sets of each media flow;
FIG. 11 illustrates a method of transmitting data flows, according to an embodiment;
FIG. 12 illustrates an example of the PDU Set importance indication;
FIG. 13 illustrates an updated example of the PDU Set importance indication based on the media visibility criteria, according to an embodiment; and
FIG. 14 illustrates an updated example of the PDU Set importance indication based on the media distance criteria, according to an embodiment.

### DETAILED DESCRIPTION

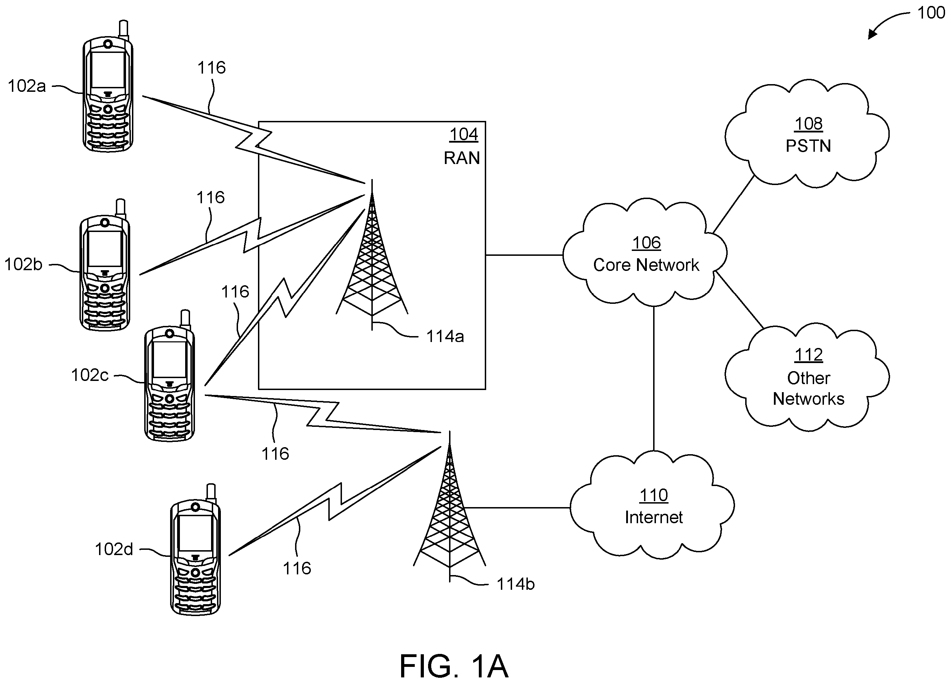

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

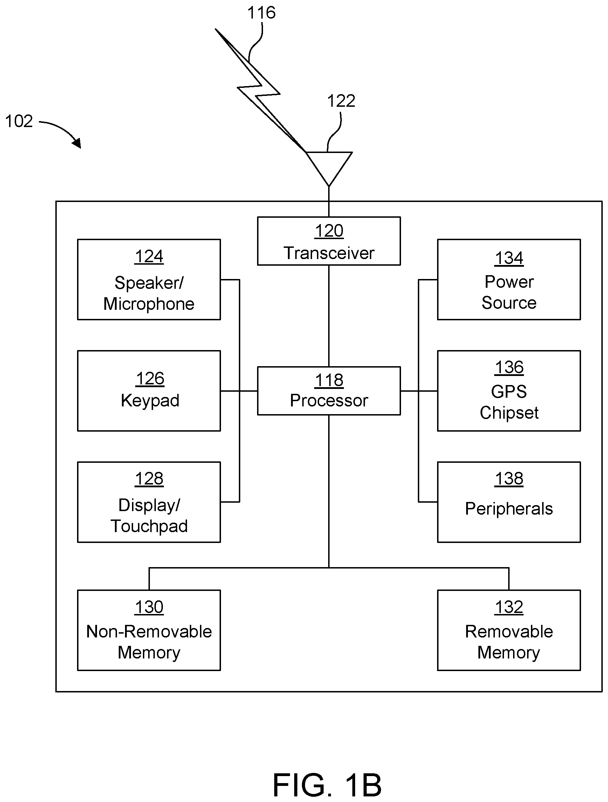

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

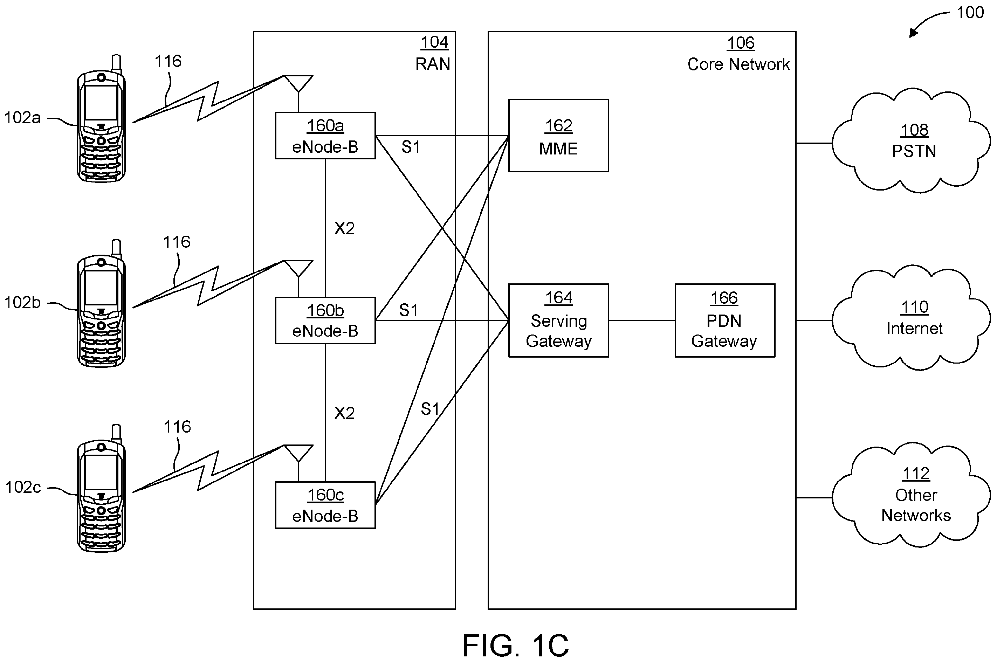

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

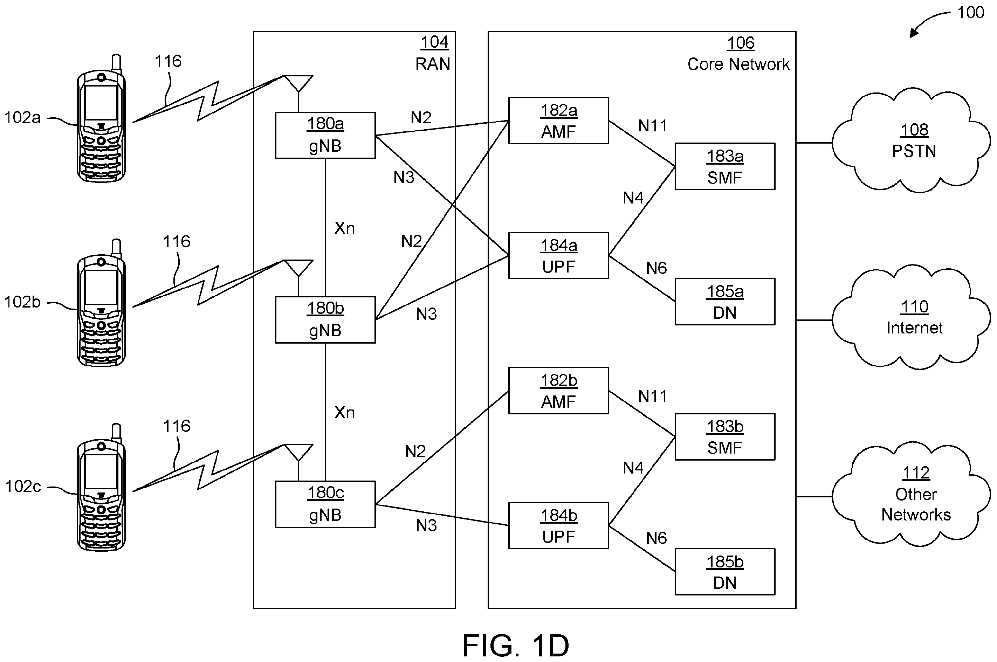

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

A rendering/presentation engine (e.g., a game engine such as Unity, Unreal Engine, etc.) may be used to compose and render a scene. The information used to compose and render the scene, generally referred to as scene information, may be provided by a scene description. One of the scene description formats is Khronos' glTF. glTF is a JSON-based file format that provides a mechanism to refer to external binary and image file(s). glTF supports static media objects including some forms of dynamicity using animation. MPEG has generally incorporated glTF as a scene graph format and extended glTF to support dynamic (timed) content such as 2D and 360-degree videos, dynamic volumetric visual media, and audio.

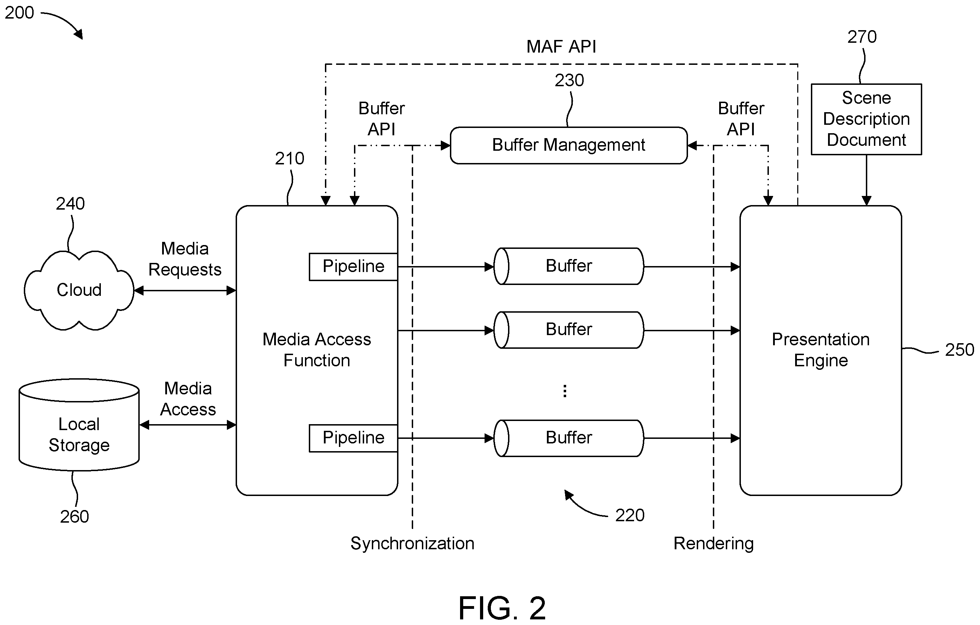

FIG. 2 illustrates an exemplary MPEG scene description architecture 200. There are two main entities in the MPEG-I scene description architecture 200: the media access function (MAF) 210 and the presentation engine (PE) 250. The foundational consideration for the reference architecture 200 is to decouple the functionality of the MAF 210 from the rendering and presentation of PE 250. MAF 210 is responsible for requesting, fetching, decoding, and post-processing the media data required by the PE 250 to render the various media objects that are part of the scene. MAF 210 is expected to present the media data in appropriate buffer formats in accordance with the scene description document 270 such that they are readable by PE 250. The scene description document 270 is loaded by PE 250 and scene description document 270 identifies from the relevant buffers for each media object in the scene and their formats.

MAF 210 communicates with cloud 240 to request media. These media requests may occur in either direction. MAF 210 communicates with local storage 260 to gain access to media. These media access may occur in either direction. MAF 210 builds the media pipeline for rendering and uses a series of buffers 220 to do so. Buffer management 230 is configured to operate between the PE 250 and MAF 210 to provide media that is synchronized for rending. PE 250 receives the media in a synchronized form from the MAF 210 via buffers 220 controlled by buffer management 230 and renders the scene.

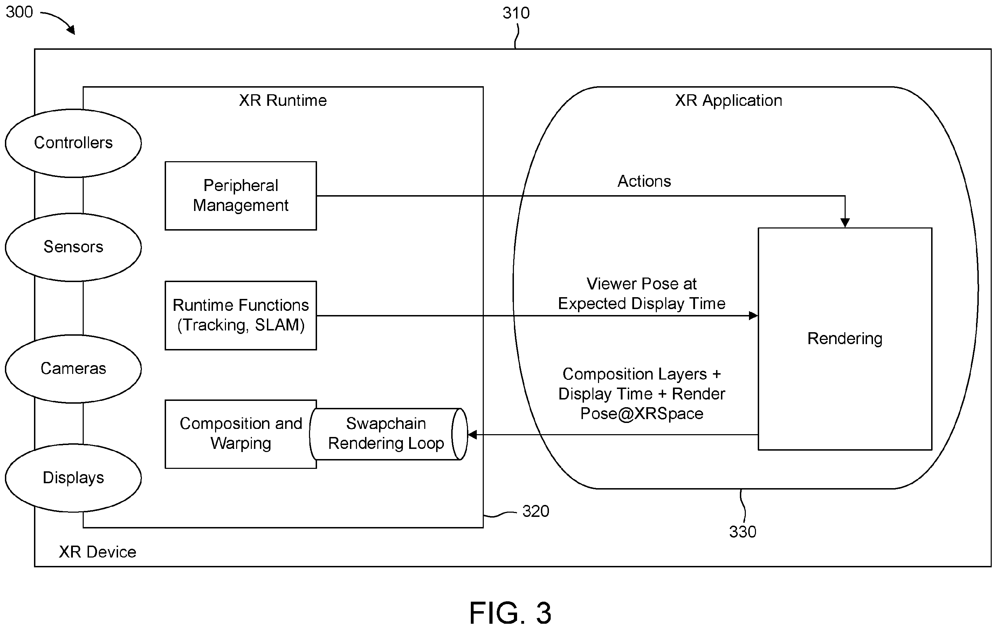

FIG. 3 illustrates an example 300 of a rendering loop for visual data that may occur within an XR device 310. The rendering loop may be used if a session is running and is in a focused state. An XR application 330 may wait on a swapchain image (e.g., before the application begins writing to the swapchain image) to avoid writing to the swapchain image before the compositor has finished reading from the swapchain image. XR application 330 may synchronize its rendering loop to an XR Runtime 320. If XR application 330 has pipelined frame submissions, XR application 320 may compute a target display time. For example, XR application 330 may compute the target display time using a predicted display time and a predicted display interval (e.g., both the predicted display time and the predicted display interval).

XR application 330 may initiate the rendering process (e.g., after the wait time is complete). XR application 330 may render different views. XR Runtime 320 may provide access to viewer pose and projection parameters (e.g., that may be used to render the different views). The view and projection information may be provided for a display time within a specified XR space. The target/predicted display time may be for a given frame.

XR application 330 may perform rendering work. Rendering work may involve copying (e.g., directly copying) data from the application into the swapchain. The rendering work may involve iterating over the scene graph nodes and rendering complex objects. If the views/layers (e.g., all views/layers) are rendered, the application may send the views/layers to XR Runtime 320 for compositing (e.g., final compositing). The application may include (e.g., also send) the expected display time and the associated render pose.

The XR application may offload the composition of the final image to an XR Runtime-supplied compositor. The compositor may blend and flatten the layers (e.g., all layers). The compositor may present this image (e.g., with the blended and flattened layers) to the system's display at a specific display time.

The rendering loop may include a (e.g., single) rendering processing module. The rendering processing module may take as inputs the actions and the viewer pose to render a three-dimensional (3D) scene.

XR application 330 may consider a change/modification of the virtual objects by updating the related scene graph (e.g., before rendering the 3D scene from the viewer pose). The update operation may include a potential physics simulation. The update operation may handle interactivity events (e.g., trigger activation, launching of actions, etc.). The update operation may be time-consuming. The duration of the update operation may vary from one rendering frame to another.

Scene rendering may involve the (e.g., actual) 3D rendering of the scene. The system may generate images of the visible objects in the scene. The system may apply various visual effects (e.g., lighting and shadows). The system may generate a final image that is ready to be displayed to the user.

The update of the scene graph the rendering loop may involve displaying the rendered image on the device's display. The system may perform additional post-processing may occur at the beginning of the rendering loop (e.g., before the rendering stages take place).

### 3GPP architecture for 5G interactive service

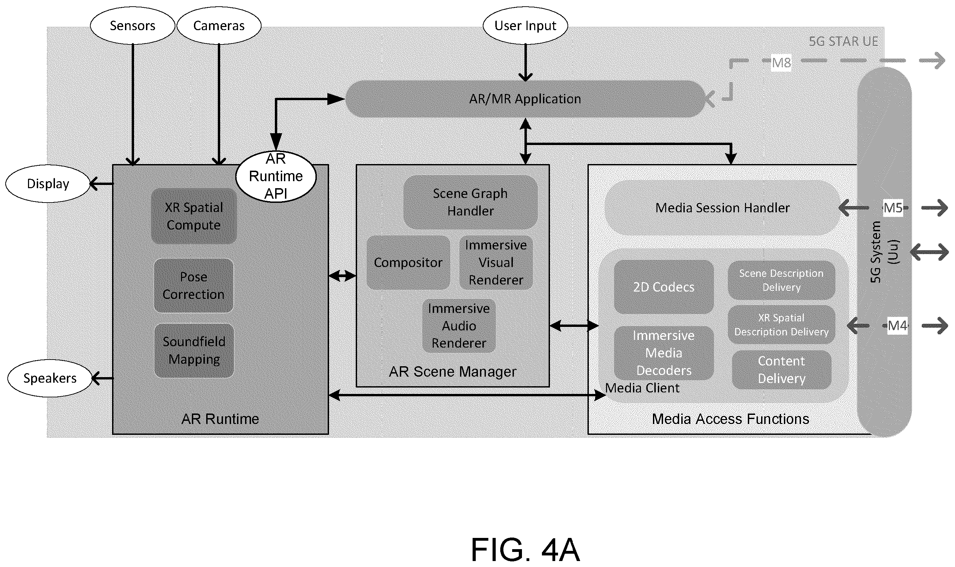

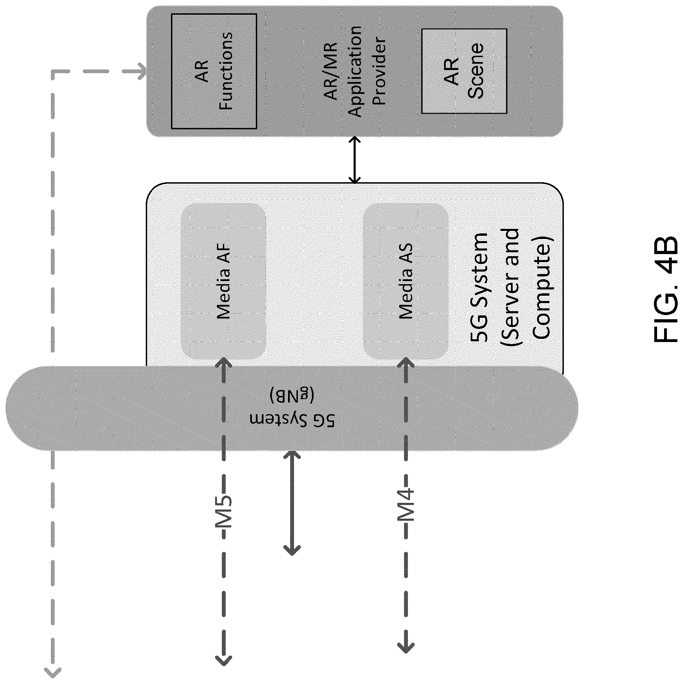

The 3GPP TR 26.998 provides a STandalone Augmented Reality (STAR) architecture for interactive immersive service, as illustrated in FIG. 4A and FIG. 4B.

A Scene Manager hosted by an interactive immersive server collects the pose and the interactions from a User Equipment (UE) and transmits the needed data flows to the UE for rendering. A data flow is a generic term for data transmitted across a network using transport protocols (e.g., Real-Time Protocol RTP) and Internet Protocol (IP)-based packets.

The main characteristics of a 5G STAR UE are described as follows:
- The STAR UE is a regular 5G UE. 5G connectivity is provided through an embedded 5G modem.
- The AR Runtime is local and uses input from sensors, audio inputs or video inputs. XR Spatial Compute is primarily local, but may access or share information on the network.
- The AR Scene Manager is local and provides immersive rendering capabilities. Support of compute on the network may be provided, but scenes may typically be composed on the UE.
- The AR/MR application is resident on the device.
- An AR/MR application provider is providing a service and the service may be supported/assisted by network-based AR functions and rendering.
- Due to the amount of processing required, such devices are likely to require a higher power consumption in comparison to the other device types.
- As the device includes all UE functionalities, the application resides and predominantly is executed on the device and all essential AR/MR functions are available for typical media processing use cases, the device referred to as STandalone AR (STAR) UE.
- Media Access Functions are provided that support the delivery of media content components over the 5G system.
- The application may also communicate though the 5G System using a dedicated interface.

### Node graph representation of an XR scene

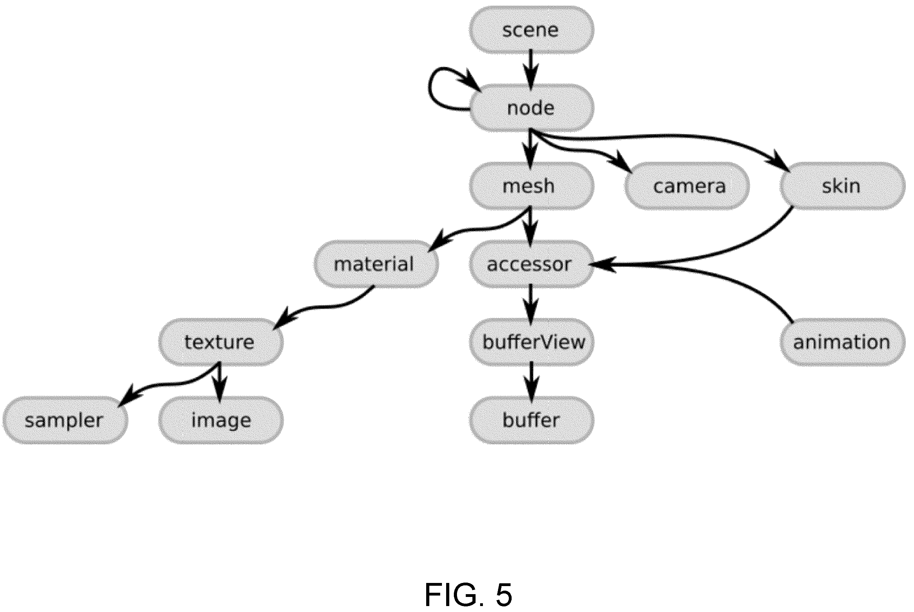

An XR scene can be represented by a node graph, as illustrated in FIG. 5. An object corresponds to a node (or a group of nodes) of the graph, each node providing spatial information (e.g., a pose information or a transformation matrix composed of translation, rotation and scale data) to place the object in the XR scene. The spatial relationships between the objects correspond to the connections between the nodes of the graph. This node can further contain several components (e.g., mesh, material, texture...) which provide the geometric and material data for rendering the object. These components may also contain media flows such as audio, video, haptics signals.

In the example of FIG. 5, the scene is the entry point for the description of the scene that is stored in the glTF. It refers to the nodes that define the scene graph. The node is one node in the scene graph hierarchy. It can contain a transformation (e.g., rotation or translation), and it may refer to further (child) nodes. Additionally, it may refer to mesh or camera instances that are "attached" to the node, or to a skin that describes a mesh deformation. The camera defines the view configuration for rendering the scene. A mesh describes a geometric object that appears in the scene. It refers to accessor objects that are used for accessing the actual geometry data, and to materials that define the appearance of the object when it is rendered. The skin defines parameters that are required for vertex skinning, which allows the deformation of a mesh based on the pose of a virtual character. The values of these parameters are obtained from an accessor.

An animation describes how transformations of certain nodes (e.g., rotation or translation) change over time. The accessor is used as an abstract source of arbitrary data. It is used by the mesh, skin, and animation, and provides the geometry data, the skinning parameters and the time-dependent animation values. It refers to a bufferView, which is a part of a buffer that contains the actual raw binary data. The material contains the parameters that define the appearance of an object. It usually refers to texture objects that will be applied to the rendered geometry. The texture is defined by a sa mpler and an image. The sampler defines how the texture image should be placed on the object.

### PDU Set and corresponding RTP Header Extension

A PDU Set is comprised of one or more PDUs carrying an application layer payload such as a video frame or video slice. The network and RAN handle all the PDUs within a Set in an integrated manner for applying differentiated Quality of Service (QoS) handling across PDU Sets.

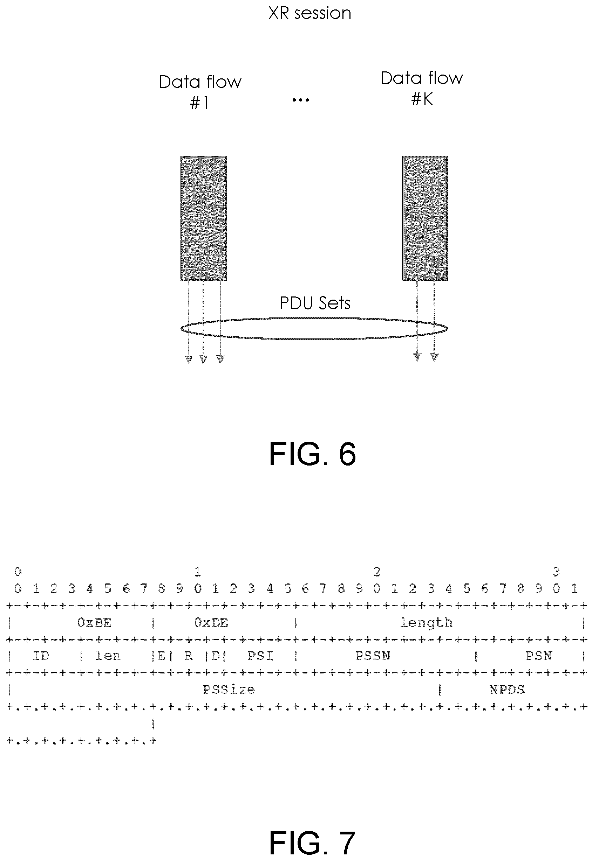

As shown in FIG. 6, PDU Sets may be defined inside and/or across data flows belonging to an XR session.

An RTP Header Extension for PDU Set Marking, as illustrated in FIG. 7, has been defined in the 3GPP TS 26.522. The semantics of the PSI field is defined as follows:
**PDU Set Importance [PSI] (4 bits):** The PDU Set Importance field indicates the importance of this PDU Set compared to other PDU Sets within the same Multimedia Session. This information may help RAN to discard PDUs, when needed. Lower values shall indicate a higher importance PDU Set, with the highest importance PDU Set indicated by 1 and the lowest importance PDU Set indicated by 15. When the RTP sender cannot define an importance, it shall set the value to 0.

In the case of traffic congestion, the RAN may need to prioritize and/or discard some PDUs of data flows belonging to the XR session based on the priority information provided by the application.

When considering an XR scene represented by a node graph, the importance indication related to each flow needs to also consider the spatial relationships between the media and/or some Quality-of-Experience (QoE) criteria in addition to the criteria of individual flows (e.g., criteria related to I, P-frames for video flow).

An importance indication considering such graph and/or QoE-based criteria may vary significantly during the XR session.

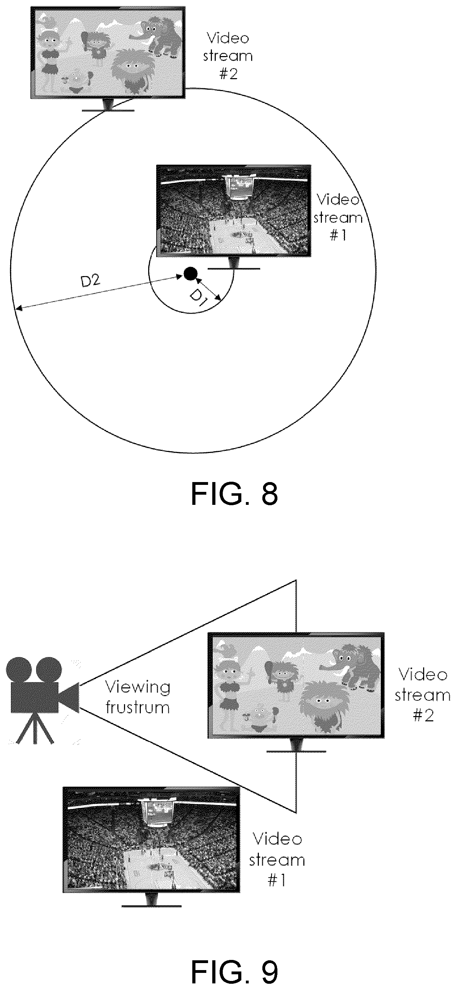

FIGs. 8-10 provides some examples where the spatial relationships of the media within an XR scene may impact the importance indication of the PDU Sets of each media flow.

FIG. 8 illustrates the distance criteria from the viewing position: the PDU Sets belonging to video stream#2 may relatively be less important compared with the PDU Sets belonging to video stream#1 because visual artefacts or freezes of video stream#2 may have less impact on the user's quality of experience (QoE) than those of video stream#1 due to the viewing distance.

FIG. 9 illustrates the visibility criteria from the viewing frustrum: the PDU Sets belonging to video stream#1 may relatively be less important compared with the PDU Sets belonging to video stream#2 because visual artefacts or freezes of video stream#1 may have less impact on the user's quality of experience (QoE) than those of video stream#2 as video stream #1 is not visible by the user.

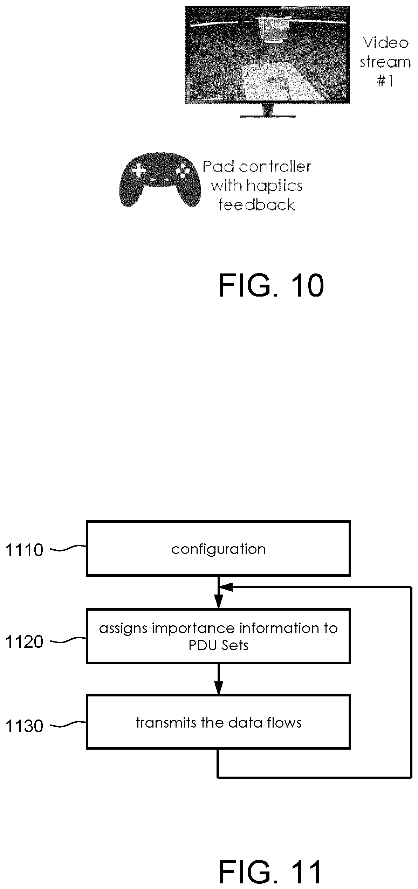

FIG. 10 illustrates a Quality-of-Experience (QoE) criteria: the PDU Sets belonging to video stream#1 may relatively be less important compared with the PDU Sets belonging to the haptic stream because the haptics feedback from user's interaction may have a higher impact on the user QoE.

The present embodiments provide a method to transmit the multi-modal flows of an eXtended Reality (XR) scene over a network based on an importance indication. The term multi-modal flows correspond to multiple data flows, each of them related to a dedicated data (e.g., video, voice, haptics, pose information). The method provides a mechanism to set the importance indication based on configured criteria (e.g., scene and/or Quality-of-Experience based criteria) which are in addition to the criteria of individual flows (e.g., criteria related to I, P-frames for video flow). An importance indication considering such scene and/or QoE-based criteria may vary significantly during the XR session. This importance indication assigned by the application is exposed to the network and the RAN for the transmitted packets to guide the RAN to prioritize and/or discard packets if needed (e.g., in the case of traffic congestion).

This method can advantageously be used by a Scene Manager (i.e., the functional entity in charge of updating the XR scene) hosted on an Application Server (AS) or a Media Function (MF). The Scene Manager may collect the pose and the interactions from the connected User Equipments (UEs) and transmit the multiple media and/or data flows needed for that XR session to the UEs for rendering.

FIG. 11 illustrates a method of transmitting multi-modal flows of an XR scene, according to one embodiment. At step 1110, configuration of the XR multi-modal flow transmission mechanism is performed based on an importance criteria. At step 1120, the importance indication is assigned to each set of the Protocol Data Unit (PDU Set) defined in the data flows. At step 1130, the data flows are transmitted. The steps are described in more detail in the following.

### Configuration of the XR multi-modal flow transmission mechanism (1110)

The configuration data of the XR multi-modal flow transmission mechanism may be provided within an XR scene description file (e.g., MPEG-I Scene Description) containing the graph representation of the XR scene, within a dedicated configuration file or message or through an API. For example, the configuration data of the XR scene state transmission mechanism may be provided in an XR scene description format such as the Khronos glTF.

The configuration is typically done at the beginning of the XR session and when an update of the XR scene description file is received to handle changes in the content (e.g., addition/removal of objects).

The following importance criteria related to the spatial relationships between the media and/or some Quality-of-Experience (QoE) metrics may be provided as configuration data in addition to the criteria of individual flows:
- Object viewing distance criteria, associated with distance thresholds
- Object visibility criteria, which may be associated with some visibility percentage thresholds
- Object screen coverage criteria, associated with screen coverage thresholds. This criteria may be associated with an object importance by considering that an object having a large screen coverage has more impact on the user's experience than an object covering a small part of the screen
- Object rendering quality criteria. This criteria considers that an object rendered at high quality (e.g., with higher level-of-details for the geometry) is more important than an object rendered at lower quality
- QoE criteria
   o For example, a haptic stream resulting from a user's interaction with a tactile object may be relatively more important than a video stream

### Assigning the importance indication to each PDU Set (1120)

In this step, the importance indication of each PDU Set is assigned by considering the importance criteria provided in the configuration step in addition to the criteria of individual flows.

The importance indication may be expressed as an integer value (e.g., coded over 4 bits, from 1 with the highest importance to 15 for the lowest importance) or an enumerator (e.g., LOW_IMPORTANCE, MEDIUM_IMPORTANCE, HIGH_IMPORTANCE) depending on the semantics defined for the related transport protocol.

In the remaining part, the RTP transport protocol is considered as an example.

The PSI field of the RTP header extension to support PDU Set may be used to expose the importance indication to the network/RAN. The PSI field is coded over 4 bits (from 1 with the highest importance to 15 for the lowest importance) as specified in TS 26.522.

The data flow of each medium may have one or more related PDU Sets. Some examples of defining PDU Set and assigning PDU Set importance indication to individual media flow such as the H.264/AVC and H.265/HEVC video streams are provided in TS 26.522. In particular, TS 26.522 specifies that PDU Sets that contain audio data should be assigned a lower PSI value (i.e., higher importance) compared with PDU Sets that contain other media types, and PDU Sets that contain the reference frames present in the video bitstream should be assigned a lower PSI value compared with PDU Sets that contain non-reference frames.

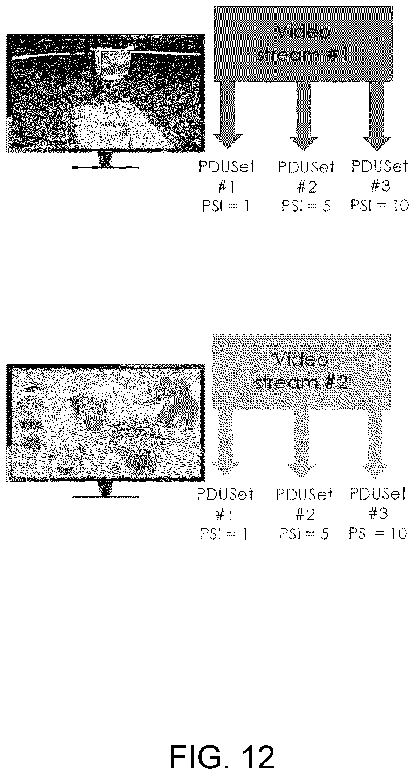

FIG. 12 illustrates assignment of the PDU Set importance indication for two video streams having three PDU Sets that only considers the criteria of individual flows. The PDU Set importance indication is identical for each video streams (PSI values of 1, 5 and 10). In this example, for a H.265/HEVC codec, the PSI value of 1 may be assigned to the Intra Random Access Pictures (IRAP) pictures, the PSI value of 5 may be assigned to the Random Access Decodable Leading (RADL) pictures, and the PSI value of 10 may be assigned to the Random Access Skipped Leading (RASL) pictures.

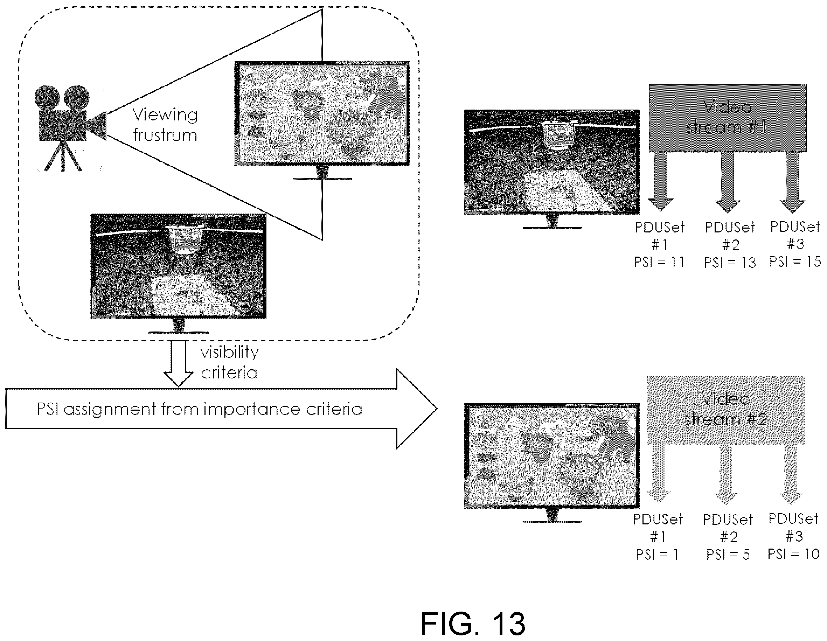

In FIG. 13, the media visibility criteria consideration is illustrated according to an embodiment. As video stream #1 is outside the viewing frustrum, the three related PDU Sets become less important compared with the three PDU Sets of video stream #2 which is inside the viewing frustrum. In that case, as illustrated in FIG. 13, one possibility is to assign the importance indication of the PDU Sets by setting the PSI of video stream #1 with higher values than the PSI of the video stream #2 (e.g., PSI values of 11, 13, 15 instead of 1, 5 and 10).

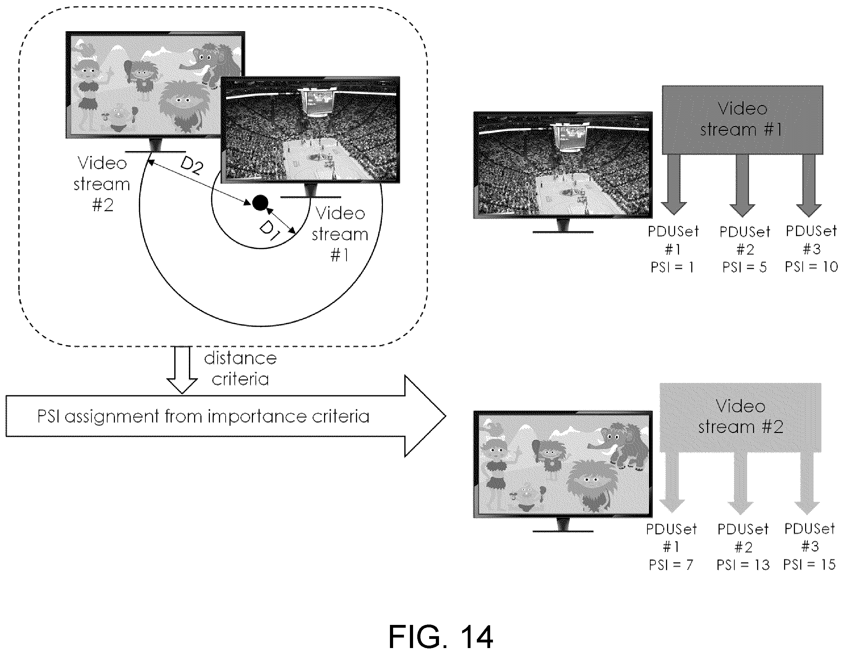

In FIG.14, the media distance criteria consideration is illustrated according to an embodiment. As video stream #1 is closer to the viewer than video stream #2, the rendering quality of video stream #2 becomes less important than the rendering quality of video stream #1. In that case, one possibility is to assign the importance indication of the PDU Sets by setting one PSI of video stream #2 between the three PSI of video stream #1 (e.g., PSI values of 7 instead of 1) and by setting the two other PSI of video stream #2 higher than the PSI of video stream #1 (e.g., PSI values of 13 and 15 instead of 5 and 10).

The combination of criteria may also be supported to assign the importance indication. For example, a combination of visibility and distance criteria may lead to the following assignments for the importance indication related to three video streams having three PDU Sets. PSI values of 1, 2, 3 for video stream#1 being visible and close to the viewer, PSI values of 5, 6, 7 for video stream#2 being visible and far to the viewer, and PSI values of 10, 11, 12 for video stream#3 being not visible. In this example, it is assumed that the visibility criteria has more impact on the user experience than the distance criteria.

Of course, other assignments may be possible depending, for example, on the impact on the user QoE.

### Transmission of the data flows (1130)

The data flows are transmitted using for example RTP with the header extension to support PDU Set. The PSI field may be used to expose the importance indication to the network/RAN.

Thanks to this information, a RAN node can identify which PDU Sets are more important than others from an XR scene and/or a user Quality of Experience point of view during the XR session. The RAN may use this information to prioritize or discard PDUs.

At the receiver side, the treatment of the data suffers less network impairments (e.g., loss of data, long delay) given the importance notification handling in the network/RAN. Even in case of strong network impairments (i.e., when the data identified as less important are discarded), the receiver has in time the necessary data (i.e., the data notified as important) to perform some treatments for an acceptable user experience.

In the above, we use the PSI in the 3GPP network as an example to explain how we can indicate different importance of a data set. More generally, this method can be applied to any server-client architecture (e.g., in IEEE wireless networks such as 802.11 WiFi or 802.16 WiMAX) and other syntax element to indicate the importance.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to H.264/AVC, H.265/HEVC, V-PCC, G-PCC, P11, or V-DMC codecs, haptics, audio, or avatar data flows, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method, comprising:
assigning a first importance indication to a first data set for an Extended Reality scene, the first data set corresponding to first one or more media contents in the Extended Reality scene;
assigning a second importance indication to a second data set for the Extended Reality scene, the second data set corresponding to second one or more media contents in the Extended Reality scene, wherein the first importance indication is different from the second importance indication, and wherein the first importance indication and the second importance indication are based on at least one of a viewing distance, a viewing frustum, a screen coverage, rendering quality, and quality of experience; and
transmitting the first importance indication and second importance indication.

2. The method of claim 1, wherein the first data set is a PDU set.

3. The method of claim 1 or 2, wherein the first importance indication and the second importance indication are further based on the first and second one or more media contents, respectively.

4. The method of any one of claims 1-3, wherein the first importance indication and the second importance indication are indicated by PDU Set Importance in an RTP Header Extension.

5. The method of any one of claims 1-4, further comprising:
transmitting configuration data indicating which one or more criteria an importance indication is based on.

6. The method of any one of claims 1-5, further comprising:
transmitting the first one or more media contents and the second one or more media contents.

7. The method of any one of claims 1-6, further comprising:
determining whether the first one or more media contents correspond to video or haptic media.

8. An apparatus, comprising at least one memory and one or more processors, wherein the one or more processors are configured to:
assign a first importance indication to a first data set for an Extended Reality scene, the first data set corresponding to first one or more media contents in the Extended Reality scene;
assign a second importance indication to a second data set for the Extended Reality scene, the second data set corresponding to second one or more media contents in the Extended Reality scene, wherein the first importance indication is different from the second importance indication, and wherein the first importance indication and the second importance indication are based on at least one of a viewing distance, a viewing frustum, a screen coverage, rendering quality, and quality of experience; and
transmit the first importance indication and second importance indication.

9. The apparatus of claim 8, wherein the first data set is a PDU set.

10. The apparatus of claim 8 or 9, wherein the first importance indication and the second importance indication are based on the first and second one or more media contents, respectively.

11. The apparatus of any one of claims 8-10, wherein the first importance indication and the second importance indication are indicated by PDU Set Importance in an RTP Header Extension.

12. The apparatus of any one of claims 8-11, further comprising a transmitter configured to:
transmit configuration data indicating which one or more criteria an importance indication is based on.

13. The apparatus of any one of claims 8-12, wherein the transmitter is further configured to:
transmit the first one or more media contents and the second one or more media contents.

14. The apparatus of any one of claims 8-13, wherein the one or more processors are further configured to:
determine whether the first one or more media contents correspond to video or haptic media.

15. A computer readable storage medium having stored thereon instructions for transmitting an Extended Reality scene according to the method of any one of claims 1-7.
